# EUROPEAN PATENT APPLICATION

(11) **EP 4 836 516 A1**
(43) Date of publication of application: **04.11.2026**
(21) Application number: 24922810.7
(22) Date of filing: 06.02.2024
(51) Int. Cl.: H04W 36/00, H04W 12/041

(54) **KEY UPDATING METHOD AND DEVICE**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); YOU, Xin, Dongguan, Guangdong 523860 (CN)
(74) Representative: Taor, Simon Edward William
(86) International application number: PCT/CN2024/076438
(87) International publication number: WO 2025/166567

(57) **Abstract**

A method for key update is provided in the disclosure. The method includes the following. A terminal device determines a key derivation mode in a case where the terminal device is required to perform key update. In embodiments of the disclosure, in the case where the terminal device is required to perform key update, the terminal device can flexibly determine the key derivation mode, thereby performing key update more flexibly.

## Description

### TECHNICAL FIELD

This disclosure relates to the field of communication, and in particular, to a method for key update and a device.

### BACKGROUND

To further shorten handover delay and ensure service continuity, a release 18 (R18) version of a 3rd generation partnership project (3GPP) supports a handover procedure triggered by Layer 1/Layer 2 (L1/L2), i.e., L1/L2 triggered mobility (LTM) handover. The LTM supports a user equipment (UE) to perform continuous handover among configured candidate cells. Before the introduction of the LTM, a conventional handover procedure does not support continuous handover.

### SUMMARY

A method for key update and a device are provided in embodiments of the disclosure, therefore key update can be performed more flexibly.

A method for key update is provided in embodiments of the disclosure. The method includes the following. A terminal device determines a key derivation mode in a case where the terminal device is required to perform key update.

A method for key update is provided in embodiments of the disclosure. The method includes the following. A first network device sends one or more first messages. The one or more first messages contain key information associated with one or more candidate cells.

A method for key update is provided in embodiments of the disclosure. The method includes the following. One or more second network devices receive a first message. The first message contains key information associated with one or more candidate cells.

A method for key update is provided in embodiments of the disclosure. The method includes the following. A third network device performs key update based on new key information, upon a successful access of a terminal device after handover. The new key information is from a fourth network device.

A terminal device is provided in embodiments of the disclosure. The terminal device includes a processing unit. The processing unit is configured to determine a key derivation mode, in a case where the terminal device is required to perform key update.

A first network device is provided in embodiments of the disclosure. The first network device includes a sending unit. The sending unit is configured to send one or more first messages. The one or more first messages contain key information associated with one or more candidate cells.

A second network device is provided in embodiments of the disclosure. The second network device includes a receiving unit. The receiving unit is configured to receive a first message. The first message contains key information associated with one or more candidate cells.

A third network device is provided in embodiments of the disclosure. The third network device includes a processing unit. The processing unit is configured to perform key update based on new key information, upon a successful access of a terminal device after handover. The new key information is from a fourth network device.

A terminal device is provided in embodiments of the disclosure. The terminal device includes a transceiver, a processor, and a memory. The memory is configured to store computer programs. The transceiver is configured to communicate with another device. The processor is configured to invoke and execute the computer programs stored in the memory, to cause the terminal device to perform the above method for key update.

A network device is provided in embodiments of the disclosure. The network device includes a transceiver, a processor, and a memory. The memory is configured to store computer programs. The transceiver is configured to communicate with another device. The processor is configured to invoke and execute the computer programs stored in the memory, to cause the network device to perform the above method for key update.

A chip is provided in embodiments of the disclosure. The chip is configured to implement the above method for key update.

Specifically, the chip includes a processor. The processor is configured to invoke and execute computer programs stored in a memory, to cause a device equipped with the chip to perform the above method for key update.

A computer-readable storage medium is provided in embodiments of the disclosure. The computer-readable storage medium is configured to store computer programs. The computer programs, when executed by a device, cause the device to perform the above method for key update.

A computer program product is provided in embodiments of the disclosure. The computer program product includes computer program instructions. The computer program instructions cause a computer to perform the above method for key update.

A computer program is provided in embodiments of the disclosure. The computer program, when run on a computer, causes the computer to perform the above method for key update.

In embodiments of the disclosure, in a case where the terminal device is required to perform key update, the terminal device can flexibly determine the key derivation mode, thereby performing key update more flexibly.

### BRIEF DESCRIPTION OF THE DRAWINGS

FIG. 1 is a schematic diagram of an application scenario according to embodiments of the disclosure.
FIG. 2 is a schematic diagram of a specific Layer 1/Layer 2 triggered mobility (LTM) procedure.
FIG. 3 is a schematic diagram illustrating derivation of a security key in a handover procedure.
FIG. 4 is a schematic diagram illustrating execution by a source base station.
FIG. 5 is a schematic flow chart of a method for key update according to an embodiment of the disclosure.
FIG. 6 is a schematic flow chart of a method for key update according to an embodiment of the disclosure.
FIG. 7 is a schematic flow chart of a method for key update according to an embodiment of the disclosure.
FIG. 8 is a schematic flow chart of a method for key update according to an embodiment of the disclosure.
FIG. 9 is a schematic diagram of an implementation of Embodiment 1 of the disclosure.
FIG. 10 is a schematic diagram of Mode 1 of Embodiment 1 of the disclosure.
FIG. 11 is a schematic diagram of Mode 2 of Embodiment 1 of the disclosure.
FIG. 12 is a schematic block diagram of a terminal device according to an embodiment of the disclosure.
FIG. 13 is a schematic block diagram of a first network device according to an embodiment of the disclosure.
FIG. 14 is a schematic block diagram of a second network device according to an embodiment of the disclosure.
FIG. 15 is a schematic block diagram of a third network device according to an embodiment of the disclosure.
FIG. 16 is a schematic block diagram of a communication device according to embodiments of the disclosure.
FIG. 17 is a schematic block diagram of a chip according to embodiments of the disclosure.
FIG. 18 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure may be applied to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (WiFi) system, a 5th-generation (5G) system, or other communication systems, etc.

Generally, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure may also be applied to these communication systems.

In an embodiment, the communication system in embodiments of the disclosure may be applied to a carrier aggregation (CA) scenario, or may be applied to a dual connectivity (DC) scenario, or may be applied to a standalone (SA) network deployment scenario.

In an embodiment, the communication system in embodiments of the disclosure may be applied to an unlicensed spectrum, and an unlicensed spectrum may also be regarded as a shared spectrum; or, the communication system in embodiments of the disclosure may also be applied to a licensed spectrum, and a licensed spectrum may also be considered as a non-shared spectrum.

Various embodiments of the disclosure are described in connection with a network device and a terminal device. The terminal device may also be referred to as user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus, etc.

The terminal device may be a station (ST) in a WLAN, a cellular radio telephone, a cordless telephone, a session initiation protocol (SIP) telephone, a wireless local loop (WLL) station, a personal digital assistant (PDA) device, a handheld device or a computing device with wireless communication functions, other processing devices coupled with a wireless modem, an in-vehicle device, a wearable device, or a terminal device in a next-generation communication system, for example, a terminal device in an NR network, or a terminal device in a future evolved public land mobile network (PLMN), etc.

In embodiments of the disclosure, the terminal device may be deployed on land, which includes indoor or outdoor, handheld, wearable, or in-vehicle; or may be deployed on water (e.g., on a ship, etc.); or may be deployed in the air (e.g., on an airplane, a balloon, a satellite, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be referred to as a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into the clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device used to communicate with a mobile device. The network device may be an access point (AP) in a WLAN, an evolutional node B (eNB or eNodeB) in LTE, or a relay station or an AP, or an in-vehicle device, a wearable device, a network device (gNB) in an NR network, a network device in a future evolved PLMN network, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station located on land, in water, etc.

In embodiments of the disclosure, the network device may serve a cell, and the terminal device communicates with the network device on a transmission resource (e.g., a frequency-domain resource, or a spectrum resource) of the cell. The cell may be a cell corresponding to the network device (e.g., a base station). The cell may belong to a macro base station or a base station corresponding to a small cell. The small cell here may include: a metro cell, a micro cell, a pico cell, a femto cell, etc. These small cells are characterized by small coverage and low transmission power and are suitable for providing a high-rate data transmission service.

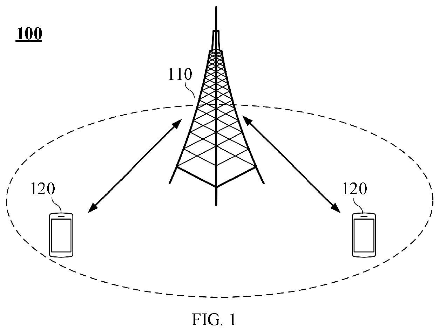

FIG. 1 exemplarily illustrates a communication system 100. The communication system includes one network device 110 and two terminal devices 120. In an embodiment, the communication system 100 may include multiple network devices 110, and there can be other quantities of terminal devices 120 in a coverage of each of the network devices 110. Embodiments of the disclosure are not limited in this regard.

In an embodiment, the communication system 100 may further include other network entities such as a mobility management entity (MME), an access and mobility management function (AMF), etc. Embodiments of the disclosure are not limited in this regard.

The network device may further include an access network device and a core network device. That is, the wireless communication system further includes multiple core networks that communicates with the access network device. The access network device may be an evolutional node B (eNB or e-NodeB), a macro base station, a micro base station (also referred to as a "small base station"), a pico base station, an AP, a transmission point (TP), or a new generation node B (gNB) in a LTE system, a next radio (NR) system, or an authorized auxiliary access LTE (LAA-LTE) system.

It may be understood that, in embodiments of the disclosure, a device with communication functions in a network/system may be referred to as a "communication device". Taking the communication system illustrated in FIG. 1 as an example, the communication device may include a network device and a terminal device with communication functions. The network device and the terminal device may be specific devices described in embodiments of the disclosure, which will not be repeated herein. The communication device may further include other devices, such as a network controller, a mobility management entity, or other network entities in the communication system. Embodiments of the disclosure are not limited in this regard.

It may be understood that, the terms "system" and "network" herein are often used interchangeably through this disclosure. The term "and/or" herein merely describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; or may mean that *A* indirectly indicates *B*, for instance, *A* indicates *C*, and *B* can be obtained according to *C*; or may mean that there is an association relationship between *A* and *B*.

In the elaboration of embodiments of the disclosure, the term "correspondence" may mean that there is a direct correspondence or an indirect correspondence between the two, or may mean that there is an association relationship between the two, or may mean a relationship of indicating and indicated, or configuring and configured, etc.

In order for better understanding of the technical solutions of embodiments of the disclosure, the related art of embodiments of the disclosure will be elaborated below. The following related art, as an optional scheme, may be arbitrarily combined with the technical solutions of embodiments of the disclosure, which shall all fall within the protection scope of embodiments of the disclosure.

### I. Layer 1/Layer 2 Triggered Mobility (LTM)

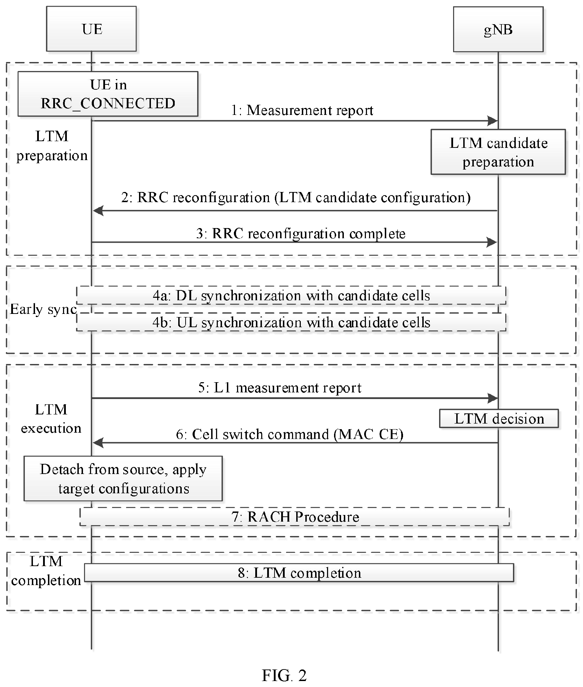

An example of a specific LTM procedure is illustrated in FIG. 2. The LTM may be performed as follows: LTM preparation, early synchronization, LTM execution, and LTM completion. Specific steps of the LTM are illustrated as follows.

A UE, such as a UE in a radio resource control (RRC) connected state, sends a measurement report to a base station, such as a gNB, and reports a Layer 3 (L3) measurement result. The base station determines to initiate an LTM procedure and triggers candidate cell preparation (which may be referred to as LTM candidate preparation).

The base station sends an RRC message (e.g., an RRC reconfiguration message) containing an LTM candidate cell configuration (which may be referred to as an LTM candidate configuration) to the UE, where one or more candidate cells may be included.

The UE stores the LTM candidate cell configuration, and feeds back a reconfiguration complete message (e.g., an RRC reconfiguration complete message) to the network.

Before receiving an LTM cell switch command, the UE may perform early uplink (UL)/downlink (DL)synchronization with a candidate cell(s) to reduce an interruption delay of a handover procedure. In step 4a, the UE performs DL synchronization with a candidate cell(s). In step 4b, the UE performs UL synchronization with a candidate cell(s).

The UE performs Layer 1 (L1) measurement on each candidate cell, and reports an L1 measurement result (e.g., an L1 measurement report) to the network.

The base station determines a target cell based on the L1 measurement result reported by the UE, and indicates to the UE that it is to switch to the target cell via a medium access control - control element (MAC CE). For example, after the base station performs LTM decision, in step 6, the base station may send a cell switch command (the MAC CE) to the UE.

Upon receiving the cell switch command, the UE detaches from a source and applies target configurations. If the UE does not currently have a valid timing advance (TA) for the target cell or a transmission configuration indication (TCI) state identifier (ID) for the target cell, the UE initiates a random access channel (RACH) procedure to the target cell upon receiving an LTM switch indication.

The UE sends an LTM completion indication to the target cell.

### II. Key Update in Xn Handover

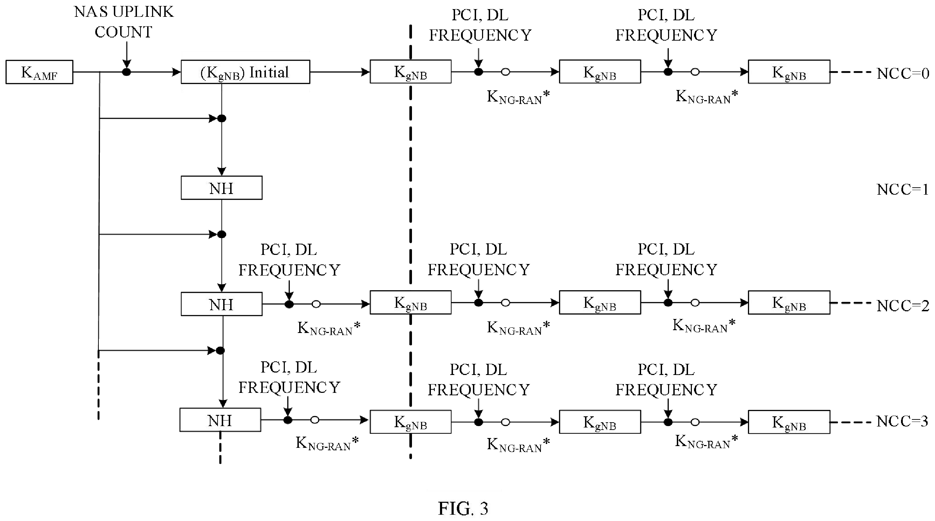

As illustrated in FIG. 3, security key derivation during handover includes two types as follows.

Horizontal derivation (or horizontal key derivation): A target key, e.g., K_{eNB*}/K_{NG-RAN*}, is generated based on an initial key, e.g., K_{gNB}/K_{eNB}, a physical cell identifier (PCI) of a target cell, and a DL frequency of the target cell.

Vertical derivation (or vertical key derivation): A next hop key (NH) is generated based on a next hop chaining count (NCC), and the target key, e.g., K_{eNB*}/K_{NG-RAN*}, is generated based on the NH, the PCI of the target cell, and the DL frequency of the target cell.

Herein, K_{gNB}/K_{eNB} represents a key used by a source base station, and K_{eNB*}/K_{NG-RAN*} represents a key used by a target base station.

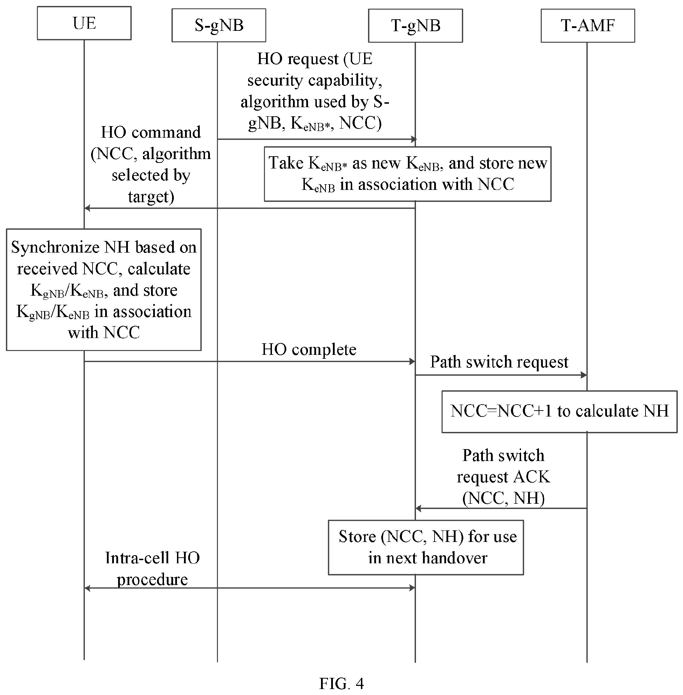

As illustrated in FIG. 4, the source base station may perform the following steps.
1. First, the source base station generates a key K_{eNB*}/K_{NG-RAN*} based on the PCI of the target cell and the DL frequency of the target cell; if there is an unused {NH, NCC} pair, the NH is used to generate the key or the NH serves as the key; if there is no unused {NH, NCC} pair, a current key K_{gNB}/K_{eNB} is used.
2. The source base station forwards the generated K_{eNB*}/K_{NG-RAN*} to the target base station. After handover, the source base station uses K_{eNB*}/K_{NG-RAN*} as K_{gNB}/K_{eNB}. The source base station carries the NCC used to generate K_{eNB*}/K_{NG-RAN*} in a handover command.

For example, reference can be made to FIG. 4. A source gNB (S-gNB) sends a handover request (HO request), which may contain a UE security capability, an algorithm used by the S-gNB, K_{eNB*}, the NCC, etc., to a target side.

The target base station may perform the following steps.
1. The target base station may use the received K_{eNB*}/K_{NG-RAN*} as K_{gNB}/K_{eNB} to communicate with the UE.
2. The target base station associates the NCC received from the source base station with K_{gNB}/K_{eNB}.
3. The target base station sends the handover command, which contains the NCC, to the UE via the source base station.
4. After handover is completed, the target base station sends a path switch request to a mobility management entity (MME).

Reference can be made to FIG. 4. A target gNB (T-gNB) may take K_{eNB*} as a new K_{eNB}, and store the new K_{eNB} in association with the NCC. After the UE completes handover to the T-gNB (HO complete), the T-gNB may send the path switch request to a target authentication management function (T-AMF) or the MME. The T-AMF may compute the NH based on the NCC, for example, the T-AMF determines a corresponding NH after incrementing the NCC by 1. The T-AMF may return a path switch request acknowledgment (path switch request ACK, which may carry {NCC, NH}) to the T-gNB. The T-gNB may store {NCC, NH} for a next handover. The T-gNB and the UE perform an intra-cell HO procedure.

The UE may perform the following steps.

Upon receiving the handover command, the UE may synchronize the NH based on the received NCC, calculate K_{gNB}/K_{eNB}, and store the K_{gNB}/K_{eNB} in association with the NCC. Specific examples are as follows.
1. If the NCC in the handover command received by the UE is equal to an NCC value associated with a current K_{gNB}/K_{eNB} on the UE side, the UE generates K_{eNB*}/K_{NG-RAN*} based on K_{gNB}/K_{eNB}, the PCI of the target cell, and the DL frequency of the target cell.
2. If the NCC in the handover command received by the UE is different from the NCC value associated with the current K_{gNB}/K_{eNB} on the UE side, the UE generates a NH based on a stored NH, and generates K_{eNB*}/K_{NG-RAN*} based on the generated NH, the PCI of the target cell, and the DL frequency of the target cell.
3. The UE may use the generated K_{eNB*}/K_{NG-RAN*} as K_{gNB}/K_{eNB} to communicate with the target base station.

If R18 LTM is limited to an intra-centralized unit (intra-CU) scenario, the UE does not need to perform key update while performing continuous handover based on LTM configuration. To further extend scenarios supported by LTM, an inter-centralized unit (inter-CU) LTM may be supported. Different from the intra-CU LTM, the inter-CU LTM involves a change of a packet data convergence protocol (PDCP) anchor, therefore a key update procedure needs to be performed.

Before the introduction of the R18 LTM, a conventional handover procedure does not support continuity. If a current handover procedure involves key update, key update information may be directly contained in the handover command by the network. To save signaling overhead caused by repeatedly providing handover configurations, the R18 LTM supports continuity, that is, after performing LTM once, the UE may still keep the LTM candidate configuration for use in a subsequent cell switch procedure. Similarly, the design of the inter-CU LTM may also consider the continuity of the LTM procedure.

However, a related update mechanism for the security key can only support a one-shot key update procedure. One or more solutions provided in embodiments of the disclosure can perform continuous key update during an inter-CU LTM procedure. LTM-related content is as follows.

Specify support for inter-CU LTM [RAN2, RAN3].

Prioritize a case where the CU is acting as a master node (MN) when dual connectivity (DC) is not configured.

As a secondary priority, support a case where new radio dual connectivity (NR-DC) is configured and the CU is acting as a secondary node (SN) and a master cell group (MCG) is unchanged.

As a secondary priority, support a case where the NR-DC is configured, the CU is acting as the MN and a secondary cell group (SCG) is unchanged or the SCG is released.

Note: The case where LTM is configured in both the MCG and the SCG is excluded.

Specify support for subsequent LTM mobility procedures aiming to avoid an RRC configuration between cell switches as per Rel-18 LTM.

Coordination with service & system aspects WG3 (SA3) is needed with respect to security key handling.

Note: The Rel. 18 intra-CU LTM procedure is considered as a baseline for adding inter-CU support.

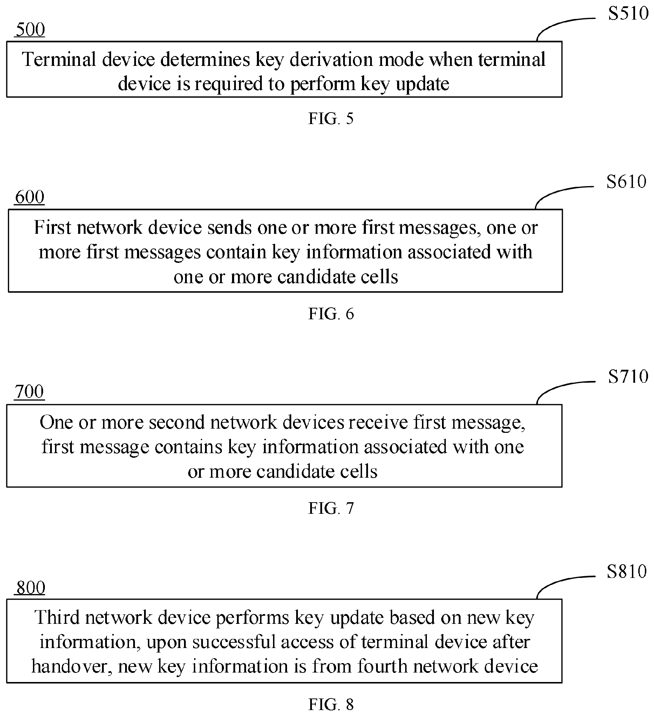

FIG. 5 is a schematic flow chart of a method 500 for key update according to an embodiment of the disclosure. The method may optionally be applied to, but is not limited to the system illustrated in FIG. 1. The method includes at least a part of the following content.

In S510, a terminal device determines a key derivation mode in a case where the terminal device is required to perform key update.

In an embodiment, the terminal device is required to perform key update during an inter-CU LTM procedure. In embodiments of the disclosure, if the terminal device determines that key update needs to be performed during a continuous handover procedure, such as the inter-CU LTM procedure, the terminal device may determine a key update mode, e.g., the key derivation mode, in multiple manners.

In an embodiment, the method further includes the following. The terminal device receives a first indication. The first indication indicates whether the terminal device is required to perform key update.

In an embodiment, the first indication is carried in an LTM cell switch command. For example, the first indication may be carried in an LTM cell switch MAC CE (which may carry the LTM cell switch command) sent by a source network device, e.g., an S-gNB, to the UE. The first indication indicates whether the UE is required to perform key update. Optionally, the first indication may also indicate the key update mode.

In an embodiment, the method further includes the following. The terminal device receives a first RRC message. The first RRC message contains configuration information of one or more candidate cells. For example, the first RRC message may be an RRC message. The terminal device may receive an RRC message carrying one or more LTM candidate cell configurations from the source network device, e.g., the S-gNB. If the LTM cell switch MAC CE, sent by the S-gNB, indicates that the UE is required to perform key update, the UE may initiate an LTM procedure to a target cell and/or a T-gNB based on the candidate cell configuration. If the first RRC message contains configuration information of only one candidate cell, the one candidate cell may serve as the target cell. If the first RRC message contains configuration information of multiple candidate cells, one of the multiple candidate cells may serve as the target cell.

In an embodiment, the configuration information of the one or more candidate cells includes group information associated with the one or more candidate cells. For example, a CU may include multiple candidate cells, and configuration information of each candidate cell includes an ID of a CU associated with each candidate cell.

In an embodiment, the terminal device determines that the terminal device is required to perform key update or that a current LTM procedure is the inter-CU LTM procedure, in a case where group information associated with the target cell and/or the group information associated with the one or more candidate cells is different from group information associated with a current serving cell of the terminal device. For example, if an ID of a CU associated with each candidate cell in the RRC message is different from an ID of a CU associated with a current serving cell of the UE, the UE may determine that the UE is required to perform key update currently, or may determine that the current LTM procedure is the inter-CU LTM procedure. For another example, if an ID of a CU associated with the target cell in the LTM cell switch MAC CE is different from the ID of the CU associated with the current serving cell of the UE, the UE may determine that the UE is required to perform key update currently, or may determine that the current LTM procedure is the inter-CU LTM procedure.

In an embodiment, the method further includes the following. The terminal device receives a second indication. The second indication indicates the key derivation mode. The key derivation mode includes horizontal key derivation or vertical key derivation. In embodiments of the disclosure, the terminal device may receive the second indication from the source network device, e.g., the S-gNB. After LTM is completed and the terminal device successfully accesses a target network device, e.g., the T-gNB, the terminal device may also receive the second indication from the T-gNB (a new S-gNB).

In an embodiment, the second indication is carried in the LTM cell switch command. The second indication indicates the key derivation mode for the current inter-CU LTM procedure of the terminal device. For example, the LTM cell switch MAC CE contains the first indication and the second indication. The first indication indicates that the UE is required to perform key update during the current inter-CU LTM procedure. The second indication indicates whether the key derivation mode for the current inter-CU LTM procedure of the UE is vertical derivation or horizontal derivation.

In an embodiment, the second indication is carried in the first RRC message or an MAC CE. The second indication indicates the key derivation mode for a next inter-CU LTM procedure. For example, the second indication may be carried in an RRC message sent by the T-gNB (the new S-gNB (e.g., an S-gNB-data unit (DU))) to the UE, to indicate the key derivation mode for the next inter-CU LTM procedure of the UE.

In an embodiment, the method further includes the following. The terminal device performs horizontal key derivation based on a key (an initial key) for the source network device, a PCI of the target cell, and a DL frequency of the target cell. For example, the UE stores K_{gNB} of the S-gNB. A horizontal key derivation mode (Mode 1) may include the following. An updated key K_{NG-RAN*} is generated according to K_{gNB}, the PCI of the target cell, and the DL frequency of the target cell.

In an embodiment, the method further includes the following. The terminal device performs vertical key derivation based on an NH, the PCI of the target cell, and the DL frequency of the target cell. The NH is determined based on a key (K_{AMF}) for a core network. For example, the UE obtains the NH. A vertical key derivation mode (Mode 2) may include the following. An updated key K_{NG-RAN*} is generated according to the NH, the PCI of the target cell, and the DL frequency of the target cell.

In an embodiment, the method further includes the following. The terminal device updates and stores an NCC. For example, after performing vertical key derivation, the UE may increment the NCC by 1 and store a new NCC.

In an embodiment, a default key derivation mode of the terminal device includes one of: horizontal key derivation, vertical key derivation, or a key derivation mode indicated by the second indication. For example, if the UE defaults to perform horizontal key derivation, after receiving the first RRC message, the UE may perform key update as elaborated above in Mode 1. If the UE defaults to perform vertical key derivation, after receiving the first RRC message, the UE may perform key update as elaborated above in Mode 2. If the UE defaults to perform the key derivation mode indicated by the second indication (Mode 3), and the second indication specifically indicates horizontal key derivation, after receiving the second indication, the UE may perform key update as elaborated above in Mode 1. If the UE defaults to perform the key derivation mode indicated by the second indication (Mode 3), and the second indication specifically indicates vertical key derivation, after receiving the second indication, the UE may perform key update as elaborated above in Mode 2.

In an embodiment, the method further includes the following. The terminal device receives a third indication. The third indication indicates that the key derivation mode of the terminal device includes at least one of: horizontal key derivation, vertical key derivation, or the key derivation mode indicated by the second indication. In embodiments of the disclosure, the third indication may use one or more bits to indicate the key derivation mode used by the UE. For example, the third indication is a 1-bit field, where a value of 1 indicates horizontal key derivation (reference can be made to Mode 1), a value of 0 indicates vertical key derivation (reference can be made to Mode 2), and absence of the third indication indicates the key derivation mode indicated by the second indication (reference can be made to Mode 3). For another example, the third indication is a 2-bits field, where a value of 01 indicates horizontal key derivation (reference can be made to Mode 1), a value of 10 indicates vertical key derivation (reference can be made to Mode 2), and a value of 11 indicates the key derivation mode indicated by the second indication (reference can be made to Mode 3).

In an embodiment, the third indication is carried in the first RRC message for configuring candidate cells. For example, the RRC message received by the UE carries the third indication and the configuration information of the one or more candidate cells.

In an embodiment, a key derivation mode for the inter-CU LTM procedure indicated by the third indication includes a key derivation mode for an initial inter-CU LTM procedure and/or a key derivation mode for a subsequent inter-CU LTM procedure. In embodiments of the disclosure, the third indication may indicate key derivation for multiple procedures. For example, the third indication indicates the key derivation mode for the initial inter-CU LTM procedure (an initial procedure) and for the subsequent inter-CU LTM procedure (a subsequent procedure). For example, the UE may perform at least one inter-CU LTM procedure based on the first RRC message. The first LTM procedure performed based on the first RRC message is the initial inter-CU LTM procedure, and an inter-CU LTM procedure (e.g., the second inter-CU LTM procedure, the third inter-CU LTM procedure) other than the first LTM procedure performed based on the first RRC message is the subsequent inter-CU LTM procedure. The key derivation modes for different procedures may be the same mode or may be different modes. For example, the key derivation mode for the initial procedure is horizontal key derivation (reference can be made to Mode 1), and the key derivation mode for the subsequent procedure is vertical key derivation (reference can be made to Mode 2). For another example, the key derivation mode for the initial procedure is vertical key derivation (reference can be made to Mode 2), and the key derivation mode for the subsequent procedure is the key derivation mode indicated by the second indication (reference can be made to Mode 3).

In an embodiment, the key derivation mode for the inter-CU LTM procedure indicated by the third indication includes the key derivation mode for the initial inter-CU LTM procedure, and the key derivation mode for the subsequent inter-CU LTM procedure is default. In embodiments of the disclosure, the third indication may indicate key derivation for one procedure, and the key derivation mode for other procedures may be default.

In an embodiment, the method further includes the following. The terminal device receives the third indication and a fourth indication. The key derivation mode for the inter-CU LTM procedure indicated by the third indication includes the key derivation mode for the initial inter-CU LTM procedure. A key derivation mode for the inter-CU LTM procedure indicated by the fourth indication includes the key derivation mode for the subsequent inter-CU LTM procedure. In embodiments of the disclosure, different indication information may indicate key derivation for different procedures. For example, the third indication indicates the key derivation mode for the initial procedure, and the fourth indication indicates the key derivation mode for the subsequent procedure. The third indication and the fourth indication may be carried in the same message or may be carried in different messages.

In an embodiment, the third indication is at a granularity of a cell group. One cell group corresponds to one key derivation mode. In embodiments of the disclosure, one centralized unit (CU) may be associated with multiple candidate cells, and one candidate cell may belong to one CU. The third indication may indicate a key derivation mode for multiple candidate cells (e.g., MCGs) that belong to one CU.

FIG. 6 is a schematic flow chart of a method 600 for key update according to an embodiment of the disclosure. The method may optionally be applied to, but is not limited to the system illustrated in FIG. 1. The method includes at least a part of the following content.

In S610, a first network device sends one or more first messages. The one or more first messages contain key information associated with one or more candidate cells. In embodiments of the disclosure, the first network device may send the one or more first messages to one or more terminal devices. The first network device may send the one or more first messages to one or more second network devices. The first network device may be a source network device. The second network device may be a candidate network device. For example, an S-gNB sends the first message to UE1. For another example, the S-gNB sends the first message(s) to both UE1 and UE2. For another example, the S-gNB sends the first message(s) to both candidate gNB1 (C-gNB1) and C-gNB2. If the first message contains key information associated with one candidate cell, the UE may use the key information associated with the one candidate cell to perform key update. If the first message contains key information associated with multiple candidate cells, the UE may determine a target cell from the multiple candidate cells, and uses the key information associated with the target cell to perform key update.

In an embodiment, the key information associated with the one or more candidate cells includes at least one of: an updated key for the one or more candidate cells, or an NCC. The updated key for each candidate cell is generated based on a key for the source network device, a PCI of each candidate cell, and a DL frequency of each candidate cell. Alternatively, the updated key for each candidate cell is generated based on an NH, the PCI of each candidate cell, and the DL frequency of each candidate cell.

In embodiments of the disclosure, the terminal device may perform horizontal key derivation based on the key (e.g., an initial key K_{gNB}) for the source network device, the PCI of each candidate cell, and the DL frequency of each candidate cell, to generate an updated key K_{gNB*} for each candidate cell. The terminal device may perform vertical key derivation based on the NH, the PCI of each candidate cell, and the DL frequency of each candidate cell, to generate the updated key K_{gNB*} for each candidate cell. Optionally, the key information associated with each candidate cell contained in the first message may also include the NCC.

In an embodiment, the method further includes the following. The first network device sends the first RRC message. The first RRC message contains configuration information of the one or more candidate cells. For example, the first RRC message sent by the second network device to the terminal device may be an RRC message. For details, reference can be made to the relevant elaborations in embodiments of the method for key update performed by the terminal device.

For specific examples of the method 600 performed by the first network device of the embodiment, reference can be made to the relevant elaborations of the first network device in the above method 500, which will not be repeated herein for the sake of simplicity.

FIG. 7 is a schematic flow chart of a method 700 for key update according to an embodiment of the disclosure. The method may optionally be applied to, but is not limited to the system illustrated in FIG. 1. The method includes at least a part of the following content.

In S710, one or more second network devices receive a first message. The first message contains key information associated with one or more candidate cells. In embodiments of the disclosure, the one or more second network devices, e.g., candidate network device(s), may receive the first message from the first network device.

In an embodiment, the method further includes the following. The one or more second network devices store received key information associated with the one or more candidate cells.

In an embodiment, the method further includes the following. The one or more second network devices delete previously stored key information associated with the one or more candidate cells. For example, if the candidate network device receives a new NCC, the candidate network device may delete its currently stored NCC, and may store the new NCC. For another example, if the candidate network device receives an updated key for at least one candidate cell, the candidate network device may delete a currently stored key associated with the at least one candidate cell, and may store the received updated key for the at least one candidate cell.

For specific examples of the method 700 performed by the second network device of the embodiment, reference can be made to the relevant elaborations of the second network device in the above method 500 and the method 600, which will not be repeated herein for the sake of simplicity.

FIG. 8 is a schematic flow chart of a method 800 for key update according to an embodiment of the disclosure. The method may optionally be applied to, but is not limited to the system illustrated in FIG. 1. The method includes at least a part of the following content.

In S810, a third network device performs key update based on new key information, upon a successful access of a terminal device after handover. The new key information is from a fourth network device. In embodiments of the disclosure, after completing an LTM procedure, the terminal device may successfully access the third network device, e.g., a target network device. The third network device may perform key update based on the new key information.

In an embodiment, the method further includes the following. The third network device sends one or more first messages. The one or more first messages contain key information associated with one or more candidate cells. In embodiments of the disclosure, after the terminal device completes the LTM procedure and successfully accesses the third network device, a role of the third network device may change from the target network device to a source network device. Then, the third network device may continue to perform S510, to send the first message(s) to one or more terminal devices and/or one or more candidate network devices, so that continuous key update can be performed during continuous handover procedures.

In an embodiment, the new key information further includes a new NH and a new NCC. The key information associated with the one or more candidate cells includes at least one of: an updated key for the one or more candidate cells, or the new NCC.

In an embodiment, the method further includes the following. The third network device generates an updated key for the source network device based on the new NH. The third network device generates an updated key for each candidate cell based on the updated key for the source network device, a PCI of each candidate cell, and a DL frequency of each candidate cell.

In embodiments of the disclosure, upon a successful access of a UE, the third network device, e.g., a T-gNB, may perform a path switch procedure with the fourth network device (e.g., an AMF). During this procedure, the AMF may provide new key information, e.g., an {NH, NCC} pair, to the T-gNB. Based on the new {NH, NCC} pair, the T-gNB may perform key update-related operations. For example, in Mode 1 (horizontal key derivation), the T-gNB generates a new key K_{gNB*} based on the NH, and then generates an updated key K_{NG-RAN*} for each candidate cell based on K_{gNB*}, the PCI of each candidate cell, and a DL frequency of each candidate cell.

In an embodiment, the method further includes the following. The third network device sends a second RRC message to the terminal device. The second RRC message indicates whether the terminal device is required to perform key update. The second RRC message includes the new NCC. For example, after the third network device completes key update using the above Mode 1, the third network device may send an RRC message to the UE. The RRC message may indicate that the terminal device also performs key update using Mode 1. The RRC message may also carry the new NCC obtained from the AMF. After the UE performs key update using Mode 1 according to the RRC message, the UEE may increment the NCC by 1 and store the updated NCC. Examples for Mode 2 and Mode 3 are similar, which will not be repeated herein.

In an embodiment, the new key information includes the new NH. The method further includes the following. The third network device generates the updated key for each candidate cell based on the new NH, the PCI of each candidate cell, and the DL frequency of each candidate cell. For example, in Mode 2 (vertical key derivation), the T-gNB generates the updated key K_{NG-RAN*} for each candidate cell based on the NH, the PCI of each candidate cell, and the DL frequency of each candidate cell.

In an embodiment, the method further includes the following. The third network device sends a second indication to the terminal device. The second indication indicates a key derivation mode. The key derivation mode includes horizontal key derivation or vertical key derivation. For example, in Mode 3 (indication), the T-gNB (a new S-gNB) determines, based on implementation, to perform at least one of the above Mode 1 or Mode 2, and informs the UE whether to perform horizontal derivation or vertical derivation for the next inter-CU LTM procedure.

In an embodiment, the second indication is carried in an LTM cell switch command. The second indication indicates a key derivation mode for a current inter-CU LTM procedure of the terminal device.

In an embodiment, the second indication is carried in the RRC message or a MAC CE. The second indication indicates a key derivation mode for a next inter-CU LTM procedure.

In an embodiment, the method further includes the following. A CU of the third network device sends a second message to a DU of the third network device. The second message indicates the key derivation mode for the next inter-CU LTM procedure. For example, the CU of the T-gNB (the new S-gNB) may send the second message to the DU of the T-gNB (the new S-gNB), to indicate the key derivation mode (which may be Mode 1, Mode 2, or Mode 3) for the next inter-CU LTM procedure of the UE. The DU may send indication information to the UE to indicate the key derivation mode for the next inter-CU LTM procedure of the UE.

In an embodiment, the second message includes group information corresponding to the candidate cell(s). The group information corresponding to the candidate cell(s) is used to determine whether the LTM procedure is an inter-CU LTM procedure or an intra-CU LTM procedure. For example, the DU may send group information corresponding to a specific candidate cell (or multiple candidate cells) to the UE. If the group information corresponding to the specific candidate cell is the same as group information of a current serving cell of the UE, it may be determined as an intra-CU LTM procedure. If the group information corresponding to the specific candidate cell is different from the group information of the current serving cell of the UE, it may be determined as an inter-CU LTM procedure.

For specific examples of the method 800 performed by the third network device of the embodiment, reference can be made to the relevant elaborations of the third network device in the above method 500, method 600, and method 700, which will not be repeated herein for the sake of simplicity.

In one example, the terminal device may be a UE, the first network device may be a source network device, the second network device may be a candidate network device, the third network device may be a target network device, and the fourth network device may be an AMF.

For example, the source network device may include an S-gNB, which is a gNB to which a cell currently accessed by the UE belongs. The candidate network device may include a C-gNB, which is a gNB to which an LTM candidate cell belongs. The target network device may include a T-gNB, which is a gNB to which a target cell for performing the LTM procedure belongs.

The method for key update in embodiments of the disclosure may include a method for security key update for a continuous MCG switch procedure, which may specifically include the following content.
(1) During LTM preparation, the S-gNB may generate a key K_{NG-RAN*} for each candidate cell.
(2) The UE performs horizontal key derivation or vertical key derivation when performing inter-CU LTM, which may specifically include at least one of the following: performing horizontal key derivation each time, performing vertical key derivation each time, or determining the key derivation mode based on dynamic network indication.
(3) After the UE successfully accesses the T-gNB, the T-gNB (the new S-gNB) may update the K_{NG-RAN*} for the next inter-CU LTM for each candidate cell.

### Embodiment 1

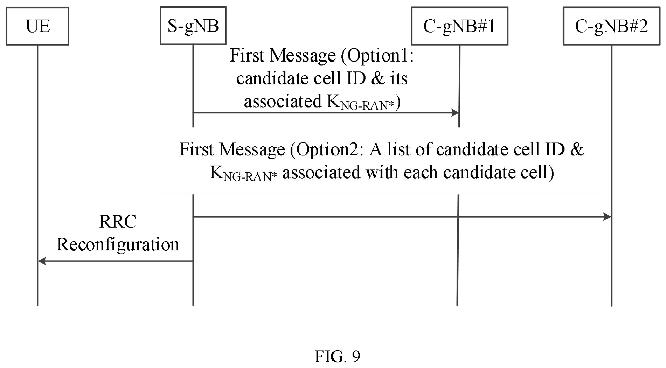

1. During LTM preparation, an S-gNB sends a first message to at least one C-gNB. The first message contains an ID of at least one candidate cell and key information associated with the candidate cell(s). The ID may be at least one of a candidate cell ID, a PCI, or a CGI. The key information associated with the candidate cell may include at least one of: (1) K_{NG-RAN*} or (2) an NCC. The S-gNB generates K_{NG-RAN*} based on K_{gNB}/an NH, a PCI of the candidate cell, and a DL frequency of the candidate cell. The S-gNB determines a key derivation mode based on whether there is an unused {NH, NCC} pair currently.
   In an embodiment (Option 1), the first message contains key information of only one candidate cell. In another implementation (Option 2), the first message contains key information of at least one candidate cell, for example, key information of all candidate cells under the C-gNB, that is, a list containing a candidate cell ID and K_{NG-RAN*} associated with each candidate cell, as illustrated in FIG. 9.
2. The S-gNB sends a first RRC message, e.g., an RRC reconfiguration message, to a UE. The first RRC message contains at least one LTM candidate cell configuration. The UE sends an L1 measurement report to the S-gNB. The S-gNB sends an LTM cell switch MAC CE to the UE. The UE initiates an LTM procedure to a target cell and/or a T-gNB, based on the candidate cell configuration and/or the LTM cell switch MAC CE sent by the S-gNB. The LTM cell switch MAC CE may carry a first indication. The first indication indicates whether the UE is required to perform key update, and/or the key update mode.
3. LTM execution and completion. For an inter-CU LTM, the T-gNB (e.g., C-gNB#1) performs a path switch procedure with an AMF after the UE successfully accesses the T-gNB. In this procedure, the T-gNB sends a path switch request to the AMF. The AMF returns a path switch request acknowledge to the T-gNB, to provide a new {NH, NCC} pair. Based on the new {NH, NCC} pair, the T-gNB may perform at least one of the following.

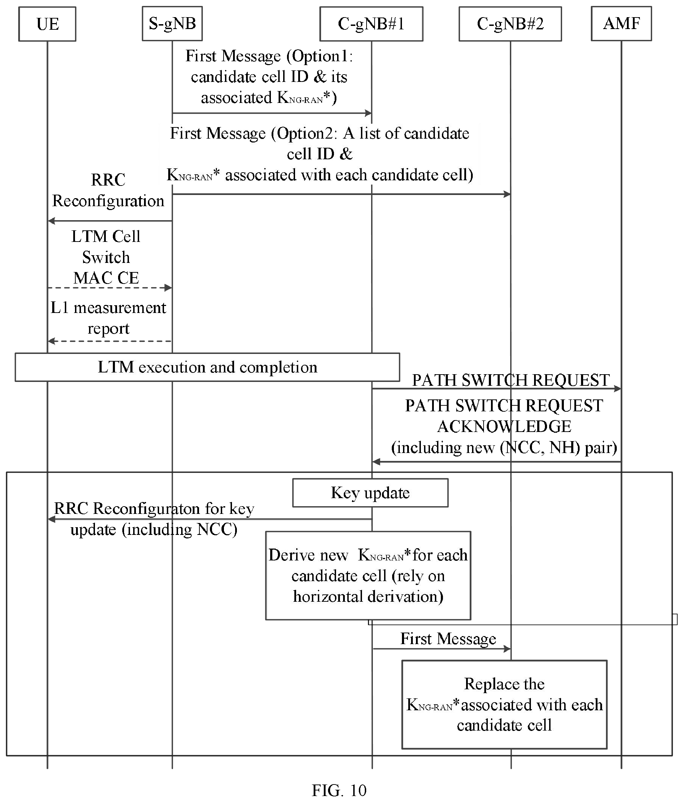

Mode 1: The T-gNB generates a new key K_{gNB*} based on the NH (key update). Meanwhile, the T-gNB sends a second RRC message to the UE, for example, an RRC reconfiguration message for key update (containing the NCC) as illustrated in FIG. 10, to indicate to the UE that it is to perform key update. Herein, the second RRC message includes a new NCC. After completing the key update, the T-gNB (a new S-gNB) performs an operation in step 1 again (sending the first message to the C-gNB). In this mode, K_{NG-RAN*} corresponding to each candidate cell is generated based on K_{gNB*}, a PCI, and a DL frequency, for example, a new K_{NG-RAN*} for each candidate cell is derived (relying on horizontal derivation). Correspondingly, when the UE performs inter-CU LTM, the UE defaults to perform horizontal derivation (horizontal key derivation). Mode 1 is illustrated in FIG. 10.

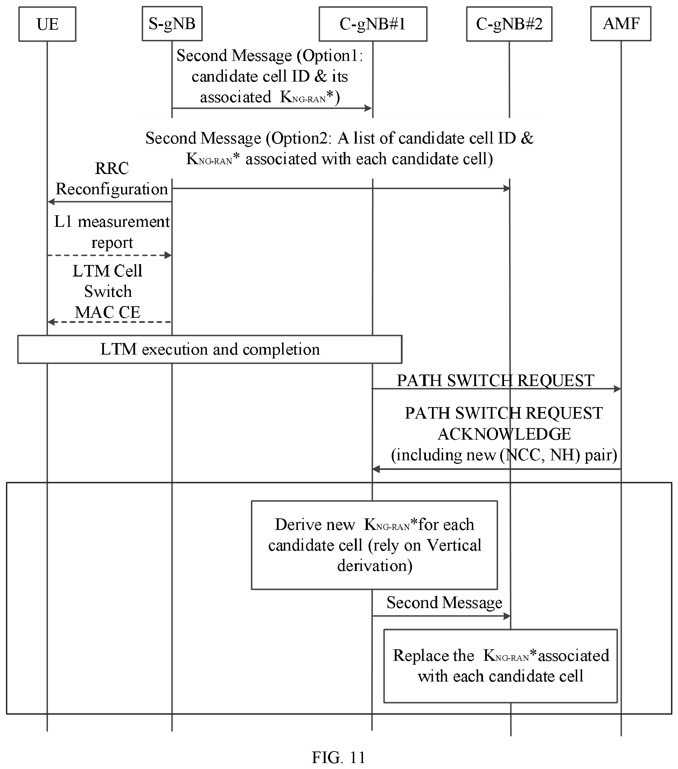

Mode 2: The T-gNB (the new S-gNB) performs an operation in step 1. In this mode, K_{NG-RAN*} corresponding to each candidate cell is generated based on the NH, the PCI, and the DL frequency. For example, a new K_{NG-RAN*} for each candidate cell is derived (relying on vertical derivation). Correspondingly, when the UE performs inter-CU LTM, the UE defaults to perform vertical derivation (vertical key derivation), as illustrated in FIG. 11.

Mode 3: The T-gNB determines, based on implementation of the T-gNB, to perform at least one of the above Mode 1 or Mode 2. In this mode, the T-gNB (the new S-gNB) needs to inform the UE whether to perform horizontal derivation or vertical derivation for a next inter-CU LTM procedure. A manner for indication is as follows. A second indication is sent to the UE.

Example 1: The second indication is carried in an LTM cell switch command. The second indication indicates a key derivation mode for a current inter-CU LTM procedure of the UE.

Example 2: The second indication is carried in an RRC message or a MAC CE. The second indication indicates a key derivation mode for the next inter-CU LTM procedure. (Different from Example 1, in Example 2, the second indication may be sent before the next LTM is triggered).

4. Reference can be made to FIG. 10 and FIG. 11. After receiving the first message, the C-gNB may replace K_{NG-RAN*} associated with each candidate cell. For example, the C-gNB deletes currently stored key information for each candidate cell and stores newly received key information for each candidate cell.

### Embodiment 2: Interaction between CU and DU (which may be combined with Mode 3 in Embodiment 1)

An S-gNB-CU sends a second message to an S-gNB-DU. The second message indicates a key derivation mode for a next inter-CU LTM procedure. Further, the second message may also contain group information corresponding to a candidate cell(s), which is used by the DU to determine whether an LTM procedure is an inter-CU procedure or in intra-CU procedure.

The S-gNB in the embodiment may include a new S-gNB transformed from a T-gNB. For example, after the S-gNB-CU performs vertical derivation or horizontal derivation, the S-gNB-CU may send the second message to the S-gNB-DU. The S-gNB-DU may send a second indication to a UE, according to the key derivation mode for the next inter-CU LTM procedure indicated by the second message, to inform the UE whether to perform horizontal derivation or vertical derivation for the next inter-CU LTM procedure.

### Embodiment 3: UE Side Operation

In step 1, a UE receives a first RRC message. The first RRC message contains a configuration for at least one LTM candidate cell. The UE determines a target cell based on an LTM cell switch MAC CE or a result of candidate cell condition evaluation, and initiates an LTM procedure to the target cell, which includes the following. The UE determines whether a current LTM procedure is an inter-CU LTM procedure or whether key update is required. A manner for determination includes the following.
(1) Determination based on a first indication. The first indication is carried in the LTM cell switch MAC CE. The first indication indicates whether the UE is required to perform key update, and/or a key update mode. For example, if the LTM cell switch MAC CE contains the first indication, the UE determines that the current LTM procedure is the inter-CU LTM procedure or that key update is required. For example, if the first indication corresponds to a first value, the UE determines that the current LTM procedure is the inter-CU LTM procedure or that key update is required.
(2) Determination based on group information associated with a candidate cell and/or a current serving cell. For example, if a group ID associated with the candidate cell is different from a group ID associated with the current serving cell, the UE determines that the current LTM procedure is the inter-CU LTM procedure or that key update is needed.

In step 2, based on step 1, if the UE determines that key update is required for the current LTM procedure, the UE further performs at least one of the following.

Operation 1: The UE performs horizontal key derivation based on K_{gNB}, a PCI of the target cell, and a DL frequency of the target cell.

Operation 2: The UE determines an NH based on KAMF. The UE performs vertical key derivation based on the NH, the PCI of the target cell, and the DL frequency of the target cell. Optionally, the UE increments a current NCC value by 1 and stores the updated NCC.

Operation 3: The UE determines a key derivation mode based on a second indication. The second indication is carried in the LTM cell switch MAC CE, or the second indication is carried in an RRC message/a MAC CE.

For operation 1, operation 2, and operation 3, the operation of the UE further includes at least one of the following.
(1) The UE defaults to perform one of operation 1, operation 2, or operation 3.
(2) The UE determines a key derivation rule to be operation 1, operation 2, or operation 3 based on a third indication. For example, the third indication is carried in an RRC message for configuring an LTM candidate cell(s).

Further, the usage of the third indication may also include at least one of the following.

(2-1) The third indication indicates a key derivation mode (also referred to as the key derivation rule) for each inter-CU LTM procedure. The key derivation mode includes an initial mode and a subsequent mode.

(2-2) The third indication indicates a key derivation mode for an initial inter-CU LTM procedure. A key derivation rule for a subsequent inter-CU LTM procedure is default.

(2-3) The third indication indicates a key derivation mode for a subsequent inter-CU LTM procedure. Further, a fourth indication indicates the key derivation mode for the initial inter-CU LTM procedure. Since it is uncertain whether there is an unused {NH, NCC} pair in the S-gNB when LTM preparation is initiated, the key derivation mode for the initial inter-CU LTM may not be consistent with a subsequent procedure.

(2-4) Based on (2-3), the third indication may be at a granularity of a cell group, that is, each cell group corresponds to one key derivation rule. When the UE switches from a current cell group to another cell group, the UE determines the key derivation rule based on a third indication associated with the current cell group. Since each cell group essentially corresponds to one CU, different CUs may have their own preferred modes.

According to the solutions provided in embodiments of the disclosure, key update problems during a continuous MCG switch is solved.

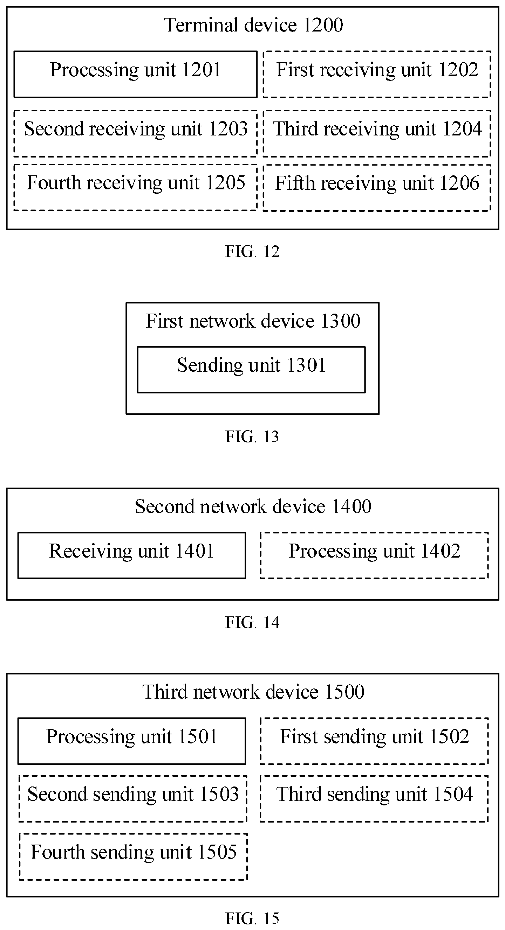

FIG. 12 is a schematic block diagram of a terminal device 1200 according to an embodiment of the disclosure. The terminal device 1200 may include a processing unit 1201. The processing unit 1201 is configured to determine a key derivation mode in a case where the terminal device is required to perform key update.

In an embodiment, the terminal device is required to perform key update during an inter-CU LTM procedure.

In an embodiment, the terminal device further includes a first receiving unit 1202. The first receiving unit 1202 is configured to receive a first indication. The first indication indicates whether the terminal device is required to perform key update.

In an embodiment, the first indication is carried in an LTM cell switch command.

In an embodiment, the terminal device further includes a second receiving unit 1203. The second receiving unit 1203 is configured to receive a first RRC message. The first RRC message contains configuration information of one or more candidate cells.

In an embodiment, the configuration information of the one or more candidate cells includes group information associated with the one or more candidate cells. The terminal device determines that the terminal device is required to perform key update or that a current LTM procedure is the inter-CU LTM procedure, in a case where group information associated with a target cell and/or the group information associated with the one or more candidate cells is different from group information associated with a current serving cell of the terminal device.

In an embodiment, the terminal device further includes a third receiving unit 1204. The third receiving unit 1204 is configured to receive a second indication. The second indication indicates the key derivation mode. The key derivation mode includes horizontal key derivation or vertical key derivation.

In an embodiment, the second indication is carried in an LTM cell switch command. The second indication indicates a key derivation mode for a current inter-CU LTM procedure of the terminal device. Alternatively, the second indication is carried in the first RRC message or an MAC CE. The second indication indicates a key derivation mode for a next inter-CU LTM procedure.

In an embodiment, the processing unit 1201 is further configured to perform horizontal key derivation based on a key for a source network device, a PCI of the target cell, and a DL frequency of the target cell.

In an embodiment, the processing unit 1201 is further configured to perform vertical key derivation based on an NH, the PCI of the target cell, and the DL frequency of the target cell. The NH is determined based on a key for a core network.

In an embodiment, the processing unit 1201 is further configured to update and store an NCC.

In an embodiment, a default key derivation mode of the terminal device includes one of: horizontal key derivation, vertical key derivation, or a key derivation mode indicated by the second indication.

In an embodiment, the terminal device further includes a fourth receiving unit 1205. The fourth receiving unit 1205 is configured to receive a third indication. The third indication indicates that the key derivation mode of the terminal device includes at least one of: horizontal key derivation, vertical key derivation, or the key derivation mode indicated by the second indication.

In an embodiment, the third indication is carried in the first RRC message for configuring candidate cells.

In an embodiment, a key derivation mode for the inter-CU LTM procedure indicated by the third indication includes a key derivation mode for an initial inter-CU LTM procedure and/or a key derivation mode for a subsequent inter-CU LTM procedure.

In an embodiment, the key derivation mode for the inter-CU LTM procedure indicated by the third indication includes the key derivation mode for the initial inter-CU LTM procedure, and the key derivation mode for the subsequent inter-CU LTM procedure is default.

In an embodiment, the terminal device further includes a fifth receiving unit 1206. The fifth receiving unit 1206 is configured to receive the third indication and a fourth indication. The key derivation mode for the inter-CU LTM procedure indicated by the third indication includes the key derivation mode for the initial inter-CU LTM procedure. A key derivation mode for the inter-CU LTM procedure indicated by the fourth indication includes the key derivation mode for the subsequent inter-CU LTM procedure.

In an embodiment, the third indication is at a granularity of a cell group. One cell group corresponds to one key derivation mode.

The terminal device 1200 in embodiments of the disclosure can implement corresponding functions of the terminal device in the foregoing method embodiments. For the procedure, function, implementation, and advantage corresponding to each module (sub-module, unit, or assembly, etc.) in the terminal device 1200, reference may be made to the corresponding illustrations in the foregoing method embodiments, which will not be repeated herein. It may be noted that, the functions of various modules (sub-modules, units, or assemblies, etc.) in the terminal device 1200 in embodiments of the disclosure may be implemented by different modules (sub-modules, units, or assemblies, etc.), or may be implemented by the same module (sub-module, unit, or assembly, etc.).

FIG. 13 is a schematic block diagram of a first network device 1300 according to an embodiment of the disclosure. The first network device 1300 may include a sending unit 1301. The sending unit 1301 is configured to send one or more first messages. The one or more first messages contain key information associated with one or more candidate cells.

In an embodiment, the key information associated with the one or more candidate cells includes at least one of: an updated key for the one or more candidate cells, or an NCC. The updated key for each candidate cell is generated based on a key for a source network device, a PCI of each candidate cell, and a DL frequency of each candidate cell; or the updated key for each candidate cell is generated based on an NH, the PCI of each candidate cell, and the DL frequency of each candidate cell.

In an embodiment, the sending unit 1301 is further configured to send a first RRC message. The first RRC message contains configuration information of the one or more candidate cells.

The first network device 1300 in embodiments of the disclosure can implement corresponding functions of the first network device in the foregoing method embodiments. For the procedure, function, implementation, and advantage corresponding to each module (a sub-module, a unit, or an assembly, etc.) in the first network device 1300, reference may be made to the corresponding illustrations in the foregoing method embodiments, which will not be repeated herein. It may be noted that, the functions of various modules (sub-modules, units, or assemblies, etc.) in the first network device 1300 in embodiments of the disclosure may be implemented by different modules (the sub-modules, the units, or the assemblies, etc.), or may be implemented by the same module (the sub-module, the unit, or the assembly, etc.).

FIG. 14 is a schematic block diagram of a second network device 1400 according to an embodiment of the disclosure. The second network device 1400 may include a receiving unit 1401. The receiving unit 1401 is configured to receive a first message. The first message contains key information associated with one or more candidate cells.

In an embodiment, the second network device further includes a processing unit 1402. The processing unit 1402 is configured to store received key information associated with the one or more candidate cells.

In an embodiment, the processing unit 1402 is further configured to delete previously stored key information associated with the one or more candidate cells.

The second network device 1400 in embodiments of the disclosure can implement corresponding functions of the second network device in the foregoing method embodiments. For the procedure, function, implementation, and advantage corresponding to each module (a sub-module, a unit, or an assembly, etc.) in the second network device 1400, reference may be made to the corresponding illustrations in the foregoing method embodiments, which will not be repeated herein. It may be noted that, the functions of various modules (sub-modules, units, or assemblies, etc.) in the second network device 1400 in embodiments of the disclosure may be implemented by different modules (the sub-modules, the units, or the assemblies, etc.), or may be implemented by the same module (the sub-module, the unit, or the assembly, etc.).

FIG. 15 is a schematic block diagram of a third network device 1500 according to an embodiment of the disclosure. The third network device 1500 may include a processing unit 1501. The processing unit 1501 is configured to perform key update based on new key information, upon a successful access of a terminal device after handover. The new key information is from a fourth network device.

In an embodiment, the third network device further includes a first sending unit 1502. The first sending unit 1502 is configured to send one or more first messages. The one or more first messages contain key information associated with one or more candidate cells.

In an embodiment, the new key information further includes a new NH and a new NCC. The key information associated with the one or more candidate cells includes at least one of: an updated key for the one or more candidate cells, or the new NCC.

In an embodiment, the processing unit 1501 is further configured to generate an updated key for a source network device based on the new NH; and generate the updated key for each candidate cell based on the updated key for the source network device, a PCI of each candidate cell, and a DL frequency of each candidate cell.

In an embodiment, the third network device further includes a second sending unit 1503. The second sending unit 1503 is configured to send a second RRC message to the terminal device. The second RRC message indicates whether the terminal device is required to perform key update. The second RRC message includes the new NCC.

In an embodiment, the new key information includes the new NH. The processing unit is further configured to generate the updated key for each candidate cell based on the new NH, the PCI of each candidate cell, and the DL frequency of each candidate cell.

In an embodiment, the third network device further includes a third sending unit 1504. The third sending unit 1504 is configured to send a second indication to the terminal device. The second indication indicates a key derivation mode. The key derivation mode includes horizontal key derivation or vertical key derivation.

In an embodiment, the second indication is carried in an LTM cell switch command. The second indication indicates a key derivation mode for a current inter-CU LTM procedure of the terminal device. Alternatively, the second indication is carried in an RRC message or an MAC CE. The second indication indicates a key derivation mode for a next inter-CU LTM procedure.

In an embodiment, the third network device further includes a fourth sending unit 1505 in a CU of the third network device. The fourth sending unit 1505 is further configured to send a second message to a DU of the third network device. The second message indicates the key derivation mode for the next inter-CU LTM procedure.

In an embodiment, the second message includes group information corresponding to the candidate cell(s). The group information corresponding to the candidate cell(s) is used to determine whether an LTM procedure is an inter-CU LTM procedure or an intra-CU LTM procedure.

The third network device 1500 in embodiments of the disclosure can implement corresponding functions of the third network device in the foregoing method embodiments. For the procedure, function, implementation, and advantage corresponding to each module (a sub-module, a unit, or an assembly, etc.) in the third network device 1500, reference may be made to the corresponding illustrations in the foregoing method embodiments, which will not be repeated herein. It may be noted that, the functions of various modules (sub-modules, units, or assemblies, etc.) in the third network device 1500 in embodiments of the disclosure may be implemented by different modules (the sub-modules, the units, or the assemblies, etc.), or may be implemented by the same module (the sub-module, the unit, or the assembly, etc.).

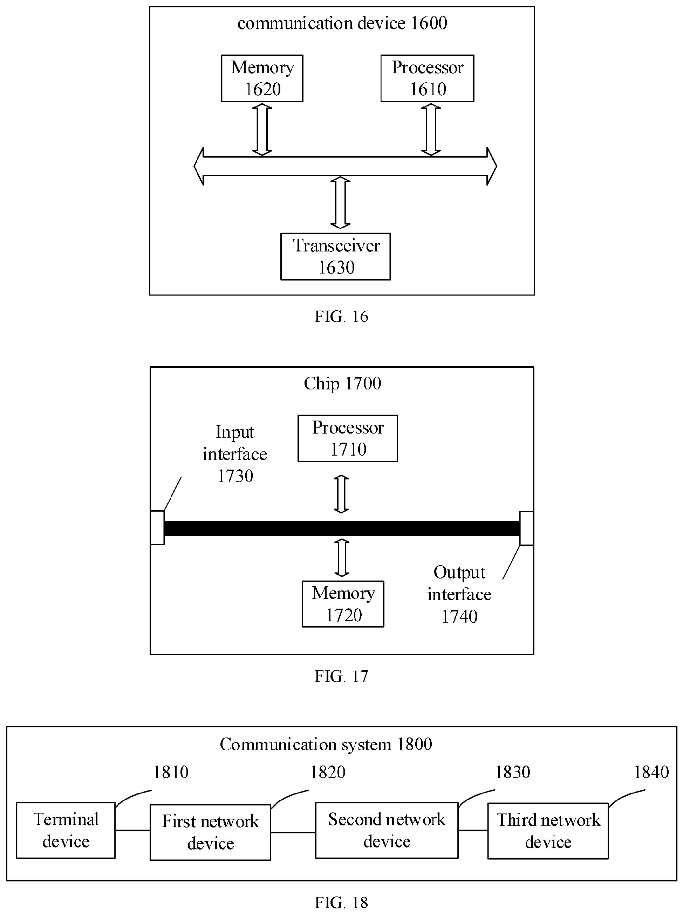

FIG. 16 is a schematic structural diagram of a communication device 1600 according to an embodiment of the disclosure. The communication device 1600 includes a processor 1610. The processor 1610 may invoke and execute computer programs stored in a memory, to cause the communication device 1600 to implement the methods in embodiments of the disclosure.

In an embodiment, the communication device 1600 may further include a memory 1620. The processor 1610 may invoke and execute computer programs stored in the memory 1620, to cause the communication device 1600 to implement the methods in embodiments of the disclosure.

The memory 1620 may be a separate device independent of the processor 1610, or may be integrated into the processor 1610.

In an embodiment, the communication device 1600 may further include a transceiver 1630. The processor 1610 can control the transceiver 1630 to communicate with other devices, specifically, to transmit information or data to other devices, or to receive information or data transmitted by other devices.

The transceiver 1630 may include a transmitter and a receiver. The transceiver 1630 may further include an antenna, where one or more antennas can be provided.

In an embodiment, the communication device 1600 may be a network device in embodiments of the disclosure, and the communication device 1600 may implement the corresponding procedures performed by the network device in various methods in embodiments of the disclosure, which will not be repeated herein for the sake of simplicity.

In an embodiment, the communication device 1600 may be a terminal device in embodiments of the disclosure, and the communication device 1600 may implement the corresponding procedures performed by the terminal device in various methods in embodiments of the disclosure, which will not be repeated here in for the sake of simplicity.

FIG. 17 is a schematic structural diagram of a chip 1700 according to an embodiment of the disclosure. The chip 1700 includes a processor 1710. The processor 1710 may invoke and execute computer programs stored in a memory, to implement the methods in embodiments of the disclosure.

In an embodiment, the chip 1700 may further include a memory 1720. The processor 1710 may invoke and execute computer programs stored in the memory 1720, to implement the methods performed by a terminal device or a network device in embodiments of the disclosure.

The memory 1720 may be a separate device independent of the processor 1710, or may be integrated into the processor 1710.

In an embodiment, the chip 1700 may further include an input interface 1730. The processor 1710 can control the input interface 1730 to communicate with other devices or chips, specifically, to obtain information or data transmitted by other devices or chips.

In an embodiment, the chip 1700 may further include an output interface 1740. The processor 1710 can control the output interface 1740 to communicate with other devices or chips, specifically, to output information or data to other devices or chips.

In an embodiment, the chip may be applied to the network device in embodiments of the disclosure, and the chip may implement the corresponding procedures performed by the network device in various methods in embodiments of the disclosure, which will not be repeated herein for the sake of simplicity.

In an embodiment, the chip may be applied to the terminal device in embodiments of the disclosure, and the chip may implement the corresponding procedures performed by the terminal device in various methods in embodiments of the disclosure, which will not be repeated herein for the sake of simplicity.

The chip applied to the network device and the chip applied to the terminal device may be the same chip, or may be different chips.

It may be understood that, the chip in embodiments of the disclosure may also be referred to as a system-on-chip (SOC).

The processor described above may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor described above may be a microprocessor or any conventional processor.

The memory described above may be a volatile memory or a non-volatile memory, or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM).

It may be understood that, the above memory is for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in embodiments of the disclosure is intended to include, but is not limited to, these and any other suitable types of memory.

FIG. 18 is a schematic block diagram of a communication system 1800 according to an embodiment of the disclosure. The communication system 1800 includes a terminal device 1810, a first network device 1820, a second network device 1830, and a third network device 1840.

The terminal device 1810 is configured to determine a key derivation mode in a case where the terminal device is required to perform key update.

The first network device 1820 is configured to send one or more first messages. The one or more first messages contain key information associated with one or more candidate cells.

The second network device 1830 is configured to receive the first message.

The third network device 1840 is configured to perform key update based on new key information, upon a successful access of the terminal device after handover. The new key information is from a fourth network device.

The terminal device 1810 may be configured to implement the corresponding functions performed by the terminal device in the above methods, the first network device 1820 may be configured to implement the corresponding functions performed by the source network device in the above methods, the second network device 1830 may be configured to implement the corresponding functions performed by the candidate network device in the above methods, and the third network device 1840 may be configured to implement the corresponding functions performed by the target network device in the above methods, which will not be repeated herein for the sake of simplicity. In the above embodiments, all or part of functions described in one or more of the embodiments can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that, in various embodiments of the disclosure, the magnitude of a sequence number of each procedure does not mean an order of execution, and the order of execution of each procedure shall be determined by its function and an internal logic and shall not constitute any limitation to the implementation of the embodiments of the disclosure.

It will be evident to those skilled in the art that, for the sake of convenience and brevity, in terms of the specific working procedures of the foregoing systems, apparatuses, and units, reference can be made to the corresponding procedures in the foregoing method embodiments, which will not be repeated herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for key update, comprising:
determining, by a terminal device, a key derivation mode in a case where the terminal device is required to perform key update.

2. The method of claim 1, wherein the terminal device is required to perform key update during an inter-centralized unit (inter-CU) Layer 1/Layer 2 triggered mobility (LTM) procedure.

3. The method of claim 1 or 2, further comprising:
receiving, by the terminal device, a first indication, wherein the first indication indicates whether the terminal device is required to perform key update.

4. The method of claim 3, wherein the first indication is carried in an LTM cell switch command.

5. The method of any one of claims 1 to 4, further comprising:
receiving, by the terminal device, a first radio resource control (RRC) message, wherein the first RRC message contains configuration information of one or more candidate cells.

6. The method of claim 5, wherein the configuration information of the one or more candidate cells comprises group information associated with the one or more candidate cells; and
determining, by the terminal device, that the terminal device is required to perform key update or that a current LTM procedure is an inter-CU LTM procedure, in a case where group information associated with a target cell and/or the group information associated with the one or more candidate cells is different from group information associated with a current serving cell of the terminal device.

7. The method of any one of claims 1 to 6, further comprising:
receiving, by the terminal device, a second indication, wherein the second indication indicates the key derivation mode, and the key derivation mode comprises horizontal key derivation or vertical key derivation.

8. The method of claim 7, wherein the second indication is carried in an LTM cell switch command, and the second indication indicates a key derivation mode for a current inter-CU LTM procedure of the terminal device; or
the second indication is carried in a first RRC message or a medium access control - control element (MAC CE), and the second indication indicates a key derivation mode for a next inter-CU LTM procedure.

9. The method of any one of claims 1 to 6, further comprising:
performing, by the terminal device, horizontal key derivation based on a key for a source network device, a physical cell identifier (PCI) of a target cell, and a downlink (DL) frequency of the target cell.

10. The method of any one of claims 1 to 6, further comprising:
performing, by the terminal device, vertical key derivation based on a next hop key (NH), a PCI of a target cell, and a DL frequency of the target cell, wherein the NH is determined based on a key for a core network.

11. The method of claim 10, further comprising:
updating and storing, by the terminal device, a next hop chaining count (NCC).

12. The method of any one of claims 1 to 11, wherein a default key derivation mode of the terminal device comprises one of: horizontal key derivation, vertical key derivation, or a key derivation mode indicated by a second indication.

13. The method of any one of claims 1 to 11, further comprising:
receiving, by the terminal device, a third indication, wherein the third indication indicates that the key derivation mode of the terminal device comprises at least one of: horizontal key derivation, vertical key derivation, or a key derivation mode indicated by a second indication.

14. The method of claim 13, wherein the third indication is carried in a first RRC message for configuring candidate cells.

15. The method of claim 13 or 14, wherein a key derivation mode for an inter-CU LTM procedure indicated by the third indication comprises a key derivation mode for an initial inter-CU LTM procedure and/or a key derivation mode for a subsequent inter-CU LTM procedure.

16. The method of claim 13 or 14, wherein a key derivation mode for an inter-CU LTM procedure indicated by the third indication comprises a key derivation mode for an initial inter-CU LTM procedure, and a key derivation mode for a subsequent inter-CU LTM procedure is default.

17. The method of any one of claims 1 to 11, further comprising:
receiving, by the terminal device, a third indication and a fourth indication, wherein a key derivation mode for an inter-CU LTM procedure indicated by the third indication comprises a key derivation mode for an initial inter-CU LTM procedure, and a key derivation mode for an inter-CU LTM procedure indicated by the fourth indication comprises a key derivation mode for a subsequent inter-CU LTM procedure.

18. The method of any one of claims 13 to 17, wherein the third indication is at a granularity of a cell group, and one cell group corresponds to one key derivation mode.

19. A method for key update, comprising:
sending, by a first network device, one or more first messages, wherein the one or more first messages contain key information associated with one or more candidate cells.

20. The method of claim 19, wherein the key information associated with the one or more candidate cells comprises at least one of:
an updated key for the one or more candidate cells, wherein the updated key for each candidate cell is generated based on a key for a source network device, a physical cell identifier (PCI) of each candidate cell, and a downlink (DL) frequency of each candidate cell; or the updated key for each candidate cell is generated based on a next hop key (NH), the PCI of each candidate cell, and the DL frequency of each candidate cell; or
a next hop chaining count (NCC).

21. The method of claim 19 or 20, further comprising:
sending, by the first network device, a first radio resource control (RRC) message, wherein the first RRC message contains configuration information of the one or more candidate cells.

22. A method for key update, comprising:
receiving, by one or more second network devices, a first message, wherein the first message contains key information associated with one or more candidate cells.

23. The method of claim 22, further comprising:
storing, by the one or more second network devices, received key information associated with the one or more candidate cells.

24. The method of claim 22 or 23, further comprising:
deleting, by the one or more second network devices, previously stored key information associated with the one or more candidate cells.

25. A method for key update, comprising:
performing, by a third network device, key update based on new key information, upon a successful access of a terminal device after handover, wherein the new key information is from a fourth network device.

26. The method of claim 25, further comprising:
sending, by the third network device, one or more first messages, wherein the one or more first messages contain key information associated with one or more candidate cells.

27. The method of claim 25 or 26, wherein the new key information further comprises a new next hop key (NH) and a new next hop chaining count (NCC), and key information associated with one or more candidate cells comprises at least one of:
an updated key for the one or more candidate cells; or
the new NCC.

28. The method of claim 27, further comprising:
generating, by the third network device, an updated key for a source network device based on the new NH; and
generating, by the third network device, an updated key for each candidate cell based on the updated key for the source network device, a physical cell identifier (PCI) of each candidate cell, and a downlink (DL) frequency of each candidate cell.

29. The method of claim 27 or 28, further comprising:
sending, by the third network device, a second radio resource control (RRC) message to the terminal device, wherein the second RRC message indicates whether the terminal device is required to perform key update, and the second RRC message comprises the new NCC.

30. The method of claim 25 or 26, wherein the new key information comprises a new NH, and the method further comprises:
generating, by the third network device, an updated key for each candidate cell based on the new NH, a PCI of each candidate cell, and a DL frequency of each candidate cell.

31. The method of any one of claims 25 to 30, further comprising:
sending, by the third network device, a second indication to the terminal device, wherein the second indication indicates a key derivation mode, and the key derivation mode comprises horizontal key derivation or vertical key derivation.

32. The method of claim 31, wherein the second indication is carried in a Layer 1/Layer 2 triggered mobility (LTM) cell switch command, and the second indication indicates a key derivation mode for a current inter-centralized unit (inter-CU) LTM procedure of the terminal device; or
the second indication is carried in an RRC message or a medium access control - control element (MAC CE), and the second indication indicates a key derivation mode for a next inter-CU LTM procedure.

33. The method of any one of claims 25 to 32, further comprising:
sending, by a centralized unit (CU) of the third network device, a second message to a data unit (DU) of the third network device, wherein the second message indicates a key derivation mode for a next inter-CU LTM procedure.

34. The method of claim 33, wherein the second message comprises group information corresponding to a candidate cell, and the group information corresponding to the candidate cell is used to determine whether an LTM procedure is an inter-CU LTM procedure or an intra-CU LTM procedure.

35. A terminal device, comprising:
a processing unit configured to determine a key derivation mode, in a case where the terminal device is required to perform key update.

36. The terminal device of claim 35, wherein the terminal device is required to perform key update during an inter-centralized unit (inter-CU) Layer 1/Layer 2 triggered mobility (LTM) procedure.

37. The terminal device of claim 35 or 36, further comprising:
a first receiving unit configured to receive a first indication, wherein the first indication indicates whether the terminal device is required to perform key update.

38. The terminal device of claim 37, wherein the first indication is carried in an LTM cell switch command.

39. The terminal device of any one of claims 35 to 38, further comprising:
a second receiving unit configured to receive a first radio resource control (RRC) message, wherein the first RRC message contains configuration information of one or more candidate cells.

40. The terminal device of claim 39, wherein the configuration information of the one or more candidate cells comprises group information associated with the one or more candidate cells; and
determining, by the terminal device, that the terminal device is required to perform key update or that a current LTM procedure is an inter-CU LTM procedure, in a case where group information associated with a target cell and/or the group information associated with the one or more candidate cells is different from group information associated with a current serving cell of the terminal device.

41. The terminal device of any one of claims 35 to 40, further comprising:
a third receiving unit configured to receive a second indication, wherein the second indication indicates the key derivation mode, and the key derivation mode comprises horizontal key derivation or vertical key derivation.

42. The terminal device of claim 41, wherein the second indication is carried in an LTM cell switch command, and the second indication indicates a key derivation mode for a current inter-CU LTM procedure of the terminal device; or
the second indication is carried in a first RRC message or a medium access control - control element (MAC CE), and the second indication indicates a key derivation mode for a next inter-CU LTM procedure.

43. The terminal device of any one of claims 35 to 40, wherein the processing unit is further configured to perform horizontal key derivation based on a key for a source network device, a physical cell identifier (PCI) of a target cell, and a downlink (DL) frequency of the target cell.

44. The terminal device of any one of claims 35 to 40, wherein the processing unit is further configured to perform vertical key derivation based on a next hop key (NH), a PCI of a target cell, and a DL frequency of the target cell; and the NH is determined based on a key for a core network.

45. The terminal device of claim 44, wherein the processing unit is further configured to update and store a next hop chaining count (NCC).

46. The terminal device of any one of claims 35 to 45, wherein a default key derivation mode of the terminal device comprises one of: horizontal key derivation, vertical key derivation, or a key derivation mode indicated by a second indication.

47. The terminal device of any one of claims 35 to 46, further comprising:
a fourth receiving unit configured to receive a third indication, wherein the third indication indicates that the key derivation mode of the terminal device comprises at least one of: horizontal key derivation, vertical key derivation, or a key derivation mode indicated by a second indication.

48. The terminal device of claim 47, wherein the third indication is carried in a first RRC message for configuring candidate cells.

49. The terminal device of claim 47 or 48, wherein a key derivation mode for an inter-CU LTM procedure indicated by the third indication comprises a key derivation mode for an initial inter-CU LTM procedure and/or a key derivation mode for a subsequent inter-CU LTM procedure.

50. The terminal device of claim 47 or 48, wherein a key derivation mode for an inter-CU LTM procedure indicated by the third indication comprises a key derivation mode for an initial inter-CU LTM procedure, and a key derivation mode for a subsequent inter-CU LTM procedure is default.

51. The terminal device of any one of claims 35 to 45, further comprising:
a fifth receiving unit configured to receive a third indication and a fourth indication, wherein a key derivation mode for an inter-CU LTM procedure indicated by the third indication comprises a key derivation mode for an initial inter-CU LTM procedure, and a key derivation mode for an inter-CU LTM procedure indicated by the fourth indication comprises a key derivation mode for a subsequent inter-CU LTM procedure.

52. The terminal device of any one of claims 47 to 51, wherein the third indication is at a granularity of a cell group, and one cell group corresponds to one key derivation mode.

53. A first network device, comprising:
a sending unit configured to send one or more first messages, wherein the one or more first messages contain key information associated with one or more candidate cells.

54. The first network device of claim 53, wherein the key information associated with the one or more candidate cells comprises at least one of:
an updated key for the one or more candidate cells, wherein the updated key for each candidate cell is generated based on a key for a source network device, a physical cell identifier (PCI) of each candidate cell, and a downlink (DL) frequency of each candidate cell; or the updated key for each candidate cell is generated based on a next hop key (NH), the PCI of each candidate cell, and the DL frequency of each candidate cell; or
a next hop chaining count (NCC).

55. The first network device of claim 53 or 54, wherein the sending unit is further configured to send a first radio resource control (RRC) message, and the first RRC message contains configuration information of the one or more candidate cells.

56. A second network device, comprising:
a receiving unit configured to receive a first message, wherein the first message contains key information associated with one or more candidate cells.

57. The second network device of claim 56, further comprising:
a processing unit configured to store received key information associated with the one or more candidate cells.

58. The second network device of claim 56 or 57, wherein the processing unit is further configured to delete previously stored key information associated with the one or more candidate cells.

59. A third network device, comprising:
a processing unit configured to perform key update based on new key information, upon a successful access of a terminal device after handover, wherein the new key information is from a fourth network device.

60. The third network device of claim 59, further comprising:
a first sending unit configured to send one or more first messages, wherein the one or more first messages contain key information associated with one or more candidate cells.

61. The third network device of claim 59 or 60, wherein the new key information further comprises a new next hop key (NH) and a new next hop changing count (NCC), and key information associated with one or more candidate cells comprises at least one of:
an updated key for the one or more candidate cells; or
the new NCC.

62. The third network device of claim 61, wherein the processing unit is further configured to:
generate an updated key for a source network device based on the new NH; and
generate an updated key for each candidate cell based on the updated key for the source network device, a physical cell identifier (PCI) of each candidate cell, and a downlink (DL) frequency of each candidate cell.

63. The third network device of claim 61 or 62, further comprising:
a second sending unit configured to send a second radio resource control (RRC) message to the terminal device, wherein the second RRC message indicates whether the terminal device is required to perform key update, and the second RRC message comprises the new NCC.

64. The third network device of claim 59 or 60, wherein the new key information comprises a new NH, and the processing unit is further configured to generate an updated key for each candidate cell based on the new NH, a PCI of each candidate cell, and a DL frequency of each candidate cell.

65. The third network device of any one of claims 59 to 64, further comprising:
a third sending unit configured to send a second indication to the terminal device, wherein the second indication indicates a key derivation mode, and the key derivation mode comprises horizontal key derivation or vertical key derivation.

66. The third network device of claim 65, wherein the second indication is carried in a Layer 1/Layer 2 triggered mobility (LTM) cell switch command, and the second indication indicates a key derivation mode for a current inter-centralized unit (inter-CU) LTM procedure of the terminal device; or
the second indication is carried in an RRC message or a medium access control - control element (MAC CE), and the second indication indicates a key derivation mode for a next inter-CU LTM procedure.

67. The third network device of any one of claims 59 to 66, further comprising:
a fourth sending unit, in a centralized unit (CU) of the third network device, configured to send a second message to a data unit (DU) of the third network device, wherein the second message indicates a key derivation mode for a next inter-CU LTM procedure.

68. The third network device of claim 67, wherein the second message comprises group information corresponding to a candidate cell, and the group information corresponding to the candidate cell is used to determine whether an LTM procedure is an inter-CU LTM procedure or an intra-CU LTM procedure.

69. A terminal device, comprising: a transceiver, a processor, and a memory, wherein the memory is configured to store computer programs, the transceiver is configured to communicate with another device, and the processor is configured to invoke and execute the computer programs stored in the memory to cause the terminal device to perform the method of any one of claims 1 to 18.

70. A network device, comprising: a transceiver, a processor, and a memory, wherein the memory is configured to store computer programs, the transceiver is configured to communicate with another device, and the processor is configured to invoke and execute the computer programs stored in the memory to cause the network device to perform the method of any one of claims 19 to 34.

71. A chip, comprising: a processor configured to invoke and execute computer programs stored in a memory, to cause a device equipped with the chip to execute the method of any one of claims 1 to 34.

72. A computer-readable storage medium configured to store computer programs, wherein the computer programs, when executed by a device, cause the device to perform the method of any one of claims 1 to 34.

73. A computer program product comprising computer program instructions, wherein the computer program instructions cause a computer to perform the method of any one of claims 1 to 34.

74. A computer program causing a computer to perform the method of any one of claims 1 to 34.

75. A communication system, comprising:
a terminal device configured to perform the method of any one of claims 1 to 18;
a first network device configured to perform the method of any one of claims 19 to 21;
a second network device configured to perform the method of any one of claims 22 to 24; and
a third network device configured to perform the method of any one of claims 25 to 34.
